# EUROPÄISCHE PATENTANMELDUNG

(11) **EP 3 367 017 A1**
(43) Veröffentlichungstag der Anmeldung: **29.08.2018**
(21) Anmeldenummer: 18158272.7
(22) Anmeldetag: 23.02.2018
(51) Int. Cl.: F24H 9/20, H01R 31/06

(54) **ZWISCHENSTECKERVORRICHTUNG**

(30) Priorität: 27.02.2017 PT 109934
(71) Anmelder: Bosch Termotecnologia S.A., 3800-533 Cacia Aveiro (PT)
(72) Erfinder: Bandeira, Tiago, 3800-096 Aveiro (PT)
(74) Vertreter: Bee, Joachim

(57) **Zusammenfassung**

Die Erfindung geht aus von einer Zwischensteckervorrichtung, welche zu einer Anordnung zwischen einem mit elektrischer Energie zu versorgenden Elektrogerät (12) und einer mit einer elektrischen Energiequelle verbundenen Steckdose vorgesehen ist.

Es wird vorgeschlagen, dass die Zwischensteckervorrichtung zumindest einen abgesetzten Temperatursensor (14) aufweist, welcher dazu vorgesehen ist, zumindest eine Temperatur des Elektrogeräts (12) zu erfassen.

## Beschreibung

### Stand der Technik

Es sind bereits Zwischensteckervorrichtungen bekannt, welche zu einer Anordnung zwischen einem mit elektrischer Energie zu versorgenden Elektrogerät und einer mit einer elektrischen Energiequelle verbundenen Steckdose vorgesehen sind.

### Offenbarung der Erfindung

Die Erfindung geht aus von einer Zwischensteckervorrichtung, welche zu einer Anordnung zwischen einem mit elektrischer Energie zu versorgenden Elektrogerät und einer mit einer elektrischen Energiequelle verbundenen Steckdose vorgesehen ist.

Es wird vorgeschlagen, dass die Zwischensteckervorrichtung zumindest einen abgesetzten Temperatursensor aufweist, welcher dazu vorgesehen ist, zumindest einen Temperaturkennwert des elektrischen Geräts zu erfassen.

Unter einer "Zwischensteckervorrichtung" soll in diesem Zusammenhang insbesondere ein, insbesondere funktionstüchtiger, Bestandteil, insbesondere eine Konstruktions- und/oder Funktionskomponente und/oder eine Unterbaugruppe, eines Zwischensteckers verstanden werden. Alternativ kann die Zwischensteckervorrichtung auch den gesamten Zwischenstecker ausbilden. Unter einem "Zwischenstecker" soll in diesem Zusammenhang insbesondere eine elektrische und/oder elektronische Einheit verstanden werden, welche zumindest einen Stecker zum Einführen in eine Steckdose, insbesondere eine Haushaltssteckdose, und zumindest eine Steckbuchse zum Einführen eines Gerätesteckers eines Elektrogeräts aufweist. Insbesondere ist die Zwischensteckervorrichtung dazu vorgesehen, in zumindest einem Betriebszustand elektrische Energie von der Steckdose an ein mit der Zwischensteckervorrichtung verbundenes Elektrogerät zu leiten. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Temperatursensor" soll in diesem Zusammenhang insbesondere eine elektrische und/oder elektronische Einheit verstanden werden, welche dazu vorgesehen ist, zumindest einen Temperaturmesswert zu erfassen und direkt und/oder indirekt ein elektrisches insbesondere analoges und/oder digitales Signal auszugeben, welches zumindest eine Temperaturinformation bezüglich der erfassten Temperatur umfasst. Unter dem Begriff "abgesetzt" soll in diesem Zusammenhang insbesondere verstanden werden, dass der Temperatursensor räumlich entfernt von einer Hauptbaugruppe und/oder einem Hauptelement der Zwischensteckervorrichtung anortenbar ist. Insbesondere kann der Temperatursensor erfasste Temperaturmesswerte drahtlos und/oder drahtgebunden an eine Hauptbaugruppe und/oder ein Hauptelement der Zwischensteckervorrichtung übertragen. Beispielsweise kann der Temperatursensor als ein Thermistor, welcher seinen elektrischen Widerstand in Abhängigkeit von einer Temperatur verändert, und/oder als ein Halbleiter-Temperatursensor, welcher insbesondere eine von der erfassten Temperatur anhängige Spannung, einen von der erfassten Temperatur anhängigen Strom und/oder ein von der erfassten Temperatur anhängiges digitales Signal ausgibt, ausgebildet sein. Alternativ kann der Temperatursensor als ein kontaktloser Temperatursensor, beispielsweise als ein Infrarottemperatursensor, ausgebildet sein.

Insbesondere ist der Temperatursensor dazu vorgesehen, eine während eines Betriebs des Elektrogeräts von zumindest einem Element und/oder einer Einheit erzeugte Temperatur zu erfassen. Insbesondere kann es sich bei der Temperatur um eine Nutzwärmetemperatur und/oder eine Abwärmetemperatur des Elektrogeräts handeln. Ferner kann der Temperatursensor dazu vorgesehen sein, eine Temperatur von zumindest einem temperaturempfindlichen Teil des Elektrogeräts zu erfassen. Insbesondere ist der Temperatursensor dazu vorgesehen, die Temperatur des Elektrogeräts während eines Betriebs des Elektrogeräts insbesondere kontinuierlich oder quasi-kontinuierlich zu erfassen. Insbesondere kann die Zwischensteckervorrichtung eine Schalteinheit umfassen, welche dazu vorgesehen ist, eine Stromversorgung des Elektrogeräts im Fehlerfall, insbesondere bei einer Überspannung und/oder einem Überstrom zu trennen. Insbesondere kann die Schalteinheit dazu vorgesehen sein, die Stromversorgung bei einem Unterschreiten und/oder einem Überschreiten eines Temperaturgrenzwerts herzustellen oder zu trennen.

Durch eine derartige Ausgestaltung kann eine gattungsgemäße Zwischensteckervorrichtung mit verbesserten Eigenschaften hinsichtlich einer Temperaturmessung und/oder Temperaturüberwachung eines mit dem Zwischensteckervorrichtung verbundenen Elektrogeräts bereitgestellt werden. Insbesondere kann vorteilhaft einfach eine temperaturabhängige Schaltung einer Versorgung des Elektrogeräts mit elektrischer Energie realisiert werden. Ferner kann eine Betriebssicherheit und/oder ein Bedienkomfort eines mit der Zwischensteckervorrichtung verbundenen Elektrogeräts voreilhaft gesteigert werden.

Des Weiteren wird vorgeschlagen, dass die Zwischensteckervorrichtung zumindest eine Recheneinheit aufweist, welche dazu vorgesehen ist, anhand der erfassten Temperatur ein Nutzerverhalten hinsichtlich eines Benutzungszeitpunkts, eines Benutzungsintervalls, einer Benutzungsdauer und/oder einer Benutzungsintensität des Elektrogeräts zu ermitteln. Unter einer "Recheneinheit" soll insbesondere ein Controller mit einem Prozessor, einer Speichereinheit, und/oder ein in der Speichereinheit gespeichertes Betriebs-, Steuer- und/oder Berechnungsprogramm verstanden werden. Insbesondere ist die Recheneinheit dazu vorgesehen, über einen definierten Zeitraum eine Mehrzahl von Temperaturmesswerten zu erfassen und zu speichern. Die Recheneinheit ist insbesondere dazu vorgesehen, anhand der gespeicherten Temperaturmesswerte einen Verlauf der Temperatur zu analysieren und/oder aus dem Verlauf der Temperatur auf ein Nutzerverhalten insbesondere hinsichtlich eines Benutzungszeitpunkts, eines Benutzungsintervalls, einer Benutzungsdauer und/oder einer Benutzungsintensität des Elektrogeräts zu ermitteln. Insbesondere ist die Recheneinheit dazu vorgesehen, ein Nutzerverhalten charakterisierende Kennwerte, insbesondere Zeitpunkte eines Temperaturanstiegs und/oder eines Temperaturabfalls, Maximalwerte und/oder Minimalwerte der Temperatur, zu speichern. Die Recheneinheit ist insbesondere dazu vorgesehen, anhand der erfassten und/oder gespeicherten Temperaturmesswerte Regelmäßigkeiten und/oder sich wiederholende Muster in einem Nutzerverhalten zu ermitteln. Hierdurch können auf einfache und/oder zuverlässige Weise Informationen über ein Nutzerverhalten gewonnen werden. Hieraus können vorteilhaft Nutzerhinweise gewonnen werden, welche den Nutzer zu einer optimalen, insbesondere ökologischen, ökonomischen und/oder komfortablen, Nutzung eines mit der Zwischensteckervorrichtung verbundenen Elektrogeräts anleiten können.

Ferner wird vorgeschlagen, dass die Zwischensteckervorrichtung zumindest eine drahtlose Kommunikationsschnittstelle aufweist, welche dazu vorgesehen ist, mit zumindest einem externen Bediengerät zu kommunizieren. Insbesondere ist die Kommunikationsschnittstelle zu einer kabellosen Übertragung von elektronischen Daten vorgesehen. Die drahtlose Kommunikationsschnittstelle kann beispielsweise als WLAN-Kommunikationsschnittstelle, als Bluetooth-Kommunikationsschnittstelle, als Funk-Kommunikationsschnittstelle, als RFID-Kommunikationsschnittstelle, als NFC-Kommunikationsschnittstelle, als Infrarot-Kommunikationsschnittstelle, als Mobilfunknetz-Kommunikationsschnittstelle, als Zigbee-Kommunikationsschnittstelle o. dgl. ausgebildet sein. Besonders bevorzugt ist die drahtlose Kommunikationsschnittstelle zu einer bidirektionalen Datenübertragung vorgesehen. Ganz besonders bevorzugt basiert die drahtlose Kommunikationsschnittstelle auf einem Funkstandard zu einer Übertragung von elektronischen Daten. Bevorzugt sind mittels der kabellosen Kommunikationsschnittstelle elektronische Daten mittels einer Funkverbindung mit dem zumindest einen externen Bediengerät austauschbar. Insbesondere ist die drahtlose Kommunikationsschnittstelle dazu vorgesehen, direkt und/oder indirekt, insbesondere über ein Gateway und/oder ein Netzwerk, mit dem externen Bediengerät zu kommunizieren. Alternativ oder zusätzlich kann die Zwischensteckervorrichtung eine kabelgebundene Kommunikationsschnittstelle umfassen, wie beispielsweise eine LAN-Kommunikationsschnittstelle, eine USB-Kommunikationsschnittstelle, eine Powerline-Kommunikationsschnittstelle, eine CAN-Bus-Kommunikationsschnittstelle, eine Ethernet-Kommunikationsschnittstelle, eine twisted pair Kabel-Kommunikationsschnittstelle (CAT5 oder CAT6) o. dgl. Das externe Bediengerät kann als Smartphone, als Personal-Computer, als Laptop, als Netbook, als Tablet oder als ein anderes, einem Fachmann als sinnvoll erscheinendes externes Gerät ausgebildet sein. Vorzugsweise weist das externe Bediengerät eine Kommunikationsschnittstelle auf, welche komplementär zur Kommunikationsschnittstelle der Zwischensteckervorrichtung ausgebildet ist. Bei einer Ausgestaltung als Smartphone, als Personal-Computer, als Laptop, als Netbook oder als Tablet ist vorzugsweise eine App zu einer Kommunikation mit dem zentralen Gateway vorgesehen. Insbesondere kann das externe Bediengerät dazu vorgesehen sein, eine Schalteinheit der Zwischensteckervorrichtung zur Herstellung und/oder Trennung einer elektrischen Energieversorgung eines mit der Zwischensteckervorrichtung verbundenen Elektrogeräts zu bedienen. Alternativ und/oder zusätzlich kann das externe Bediengerät zu einer Konfiguration der Zwischensteckervorrichtung, beispielsweise zu einer Einstellung eines Einschaltzeitpunkts, eines Ausschaltzeitpunkts, eines Betriebsintervalls o.dgl., vorgesehen sein. Hierdurch kann eine vorteilhaft einfache und/oder komfortable Bedienung der Zwischensteckervorrichtung erreicht werden. Ferner kann eine vorteilhafte Erweiterung eines Funktionsumfangs eines mit der Zwischensteckervorrichtung verbundenen Elektrogeräts realisiert werden.

Zudem wird vorgeschlagen, dass die Zwischensteckervorrichtung zumindest eine Schalteinheit aufweist, welche dazu vorgesehen ist, eine Stromversorgung des Elektrogeräts zumindest in Abhängigkeit von einem Nutzerverhalten und/oder der erfassten Temperatur herzustellen oder zu trennen. Insbesondere ist die Schalteinheit unmittelbar oder mittelbar durch die Recheneinheit ansteuerbar. Die Schalteinheit ist insbesondere in Abhängigkeit von einem durch die Recheneinheit ermittelten Nutzerverhalten und/oder der erfassten Temperatur durch die Recheneinheit ansteuerbar. Insbesondere kann die Recheneinheit die Schalteinheit zu einem zuvor ermittelten üblichen Benutzungszeitpunkt und/oder für eine übliche Benutzungsdauer des mit der Zwischensteckervorrichtung verbundenen Elektrogeräts zum Herstellen oder Trennen der Stromversorgung des mit der Zwischensteckervorrichtung verbundenen Elektrogeräts ansteuern. Alternativ oder zusätzlich ist die Schalteinheit dazu vorgesehen, die Stromversorgung bei einem Unterschreiten und/oder einem Überschreiten eines Temperaturgrenzwerts herzustellen oder zu trennen. Hierdurch kann eine vorteilhaft sichere und/oder komfortable Verwendung eines mit der Zwischensteckervorrichtung verbundenen Elektrogeräts ermöglicht werden.

Des Weiteren wird ein Warmwassererzeugungssystem mit einem elektrischen Warmwasserspeicher und zumindest einer Zwischensteckervorrichtung vorgeschlagen, wobei die Zwischensteckervorrichtung zumindest einen abgesetzten Temperatursensor aufweist, welcher dazu vorgesehen ist, eine Temperatur an einem Warmwasserauslass des elektrischen Warmwasserspeichers zu erfassen. Unter einem "Warmwassererzeugungssystem" soll in diesem Zusammenhang insbesondere ein System verstanden werden, welches insbesondere zu einem Aufstellen und/oder zu einer Installation innerhalb eines Gebäudes vorgesehen ist und welches insbesondere zu einer Speicherung und/oder Erwärmung von Trink- und/oder Brauchwasser vorgesehen ist. Unter einem "Warmwasserspeicher" soll in diesem Zusammenhang insbesondere ein Behälter verstanden werden, welcher zu einer temporären und/oder dauerhaften Bevorratung von zu erwärmendem und/oder erwärmtem Brauchwasser und/oder Trinkwasser vorgesehen ist. Unter einem "Warmwasserauslass" soll in diesem Zusammenhang insbesondere eine Leitung verstanden werden, welche dazu vorgesehen ist, während eines Zapfvorgangs erwärmtes Wasser aus dem Warmwasserspeicher auszuleiten. Der Warmwasserspeicher weist insbesondere zumindest eine Kaltwasserleitung auf, welche dazu vorgesehen ist, den Warmwasserspeicher mit kaltem Wasser zu befüllen. Ferner weist der Warmwasserspeicher eine Heizeinheit auf, welche dazu vorgesehen ist, elektrische Energie in thermische Energie zu überführen. Die Heizeinheit ist insbesondere innerhalb des Warmwasserspeichers angeordnet. Der Temperatursensor ist insbesondere dazu vorgesehen, während eines Betriebs des Warmwasserspeichers betriebsbedingte Temperaturänderungen, insbesondere aufgrund eines Zapfvorgangs, innerhalb des Warmwasserauslasses zu erfassen. Neben dem Temperatursensor kann die Zwischensteckervorrichtung zumindest einen abgesetzten Vibrationssensor aufweisen. Insbesondere ist der Vibrationssensor dazu vorgesehen, zumindest eine betriebsbedingte Vibration des Warmwasserspeichers zu erfassen. Hierdurch kann vorteilhaft einfach und/oder zuverlässig ein Betrieb des Warmwasserspeichers und/oder eine Entnahme von Warmwasser aus dem Warmwasserspeicher erkannt werden.

Ferner wird vorgeschlagen, dass die Zwischensteckervorrichtung dazu vorgesehen ist, anhand der erfassten Temperatur ein Nutzerverhalten hinsichtlich eines Benutzungszeitpunkts, eines Benutzungsintervalls, einer Benutzungsdauer und/oder einer Benutzungsintensität des elektrischen Warmwasserspeichers und/oder eine verbleibende Restmenge warmen Wassers zu ermitteln. Die Zwischensteckervorrichtung ist insbesondere dazu vorgesehen, anhand der erfassten Temperaturmesswerte einen Verlauf der Temperatur zu analysieren und/oder aus dem Verlauf der Temperatur auf ein Nutzerverhalten insbesondere hinsichtlich eines Benutzungszeitpunkts, eines Benutzungsintervalls, einer Benutzungsdauer und/oder einer Benutzungsintensität des elektrischen Warmwasserspeichers zu ermitteln. Insbesondere ist die Zwischensteckervorrichtung dazu vorgesehen, ein Nutzerverhalten charakterisierende Kennwerte, insbesondere Zeitpunkte eines Temperaturanstiegs und/oder eines Temperaturabfalls, Maximalwerte und/oder Minimalwerte der Temperatur und/oder ein Zeitintervall einer zumindest gleichbleibenden Temperatur, zu speichern. Die Zwischensteckervorrichtung ist insbesondere dazu vorgesehen, anhand der erfassten Temperaturmesswerte Regelmäßigkeiten und/oder sich wiederholende Muster in einem Nutzerverhalten zu ermitteln. Zusätzlich können Vibrationsmesswerte eines Vibrationssensors zur Ermittlung eines Nutzerverhaltens herangezogen werden. Hierdurch können auf einfache und/oder zuverlässige Weise Informationen über ein Nutzerverhalten gewonnen werden.

Zudem wird vorgeschlagen, dass die Zwischensteckervorrichtung dazu vorgesehen ist, eine Stromversorgung des elektrischen Warmwasserspeichers zumindest in Abhängigkeit von einem Nutzerverhalten und/oder der erfassten Temperatur herzustellen oder zu trennen. Insbesondere kann die Zwischensteckervorrichtung die Stromversorgung des elektrischen Warmwasserspeichers derart schalten, dass zu einem zuvor ermittelten üblichen Benutzungszeitpunkt und/oder für eine übliche Benutzungsdauer des elektrischen Warmwasserspeichers und/oder zu einem üblichen Zeitpunkt und/oder für ein übliches Zeitintervall einer Warmwasserentnahme eine ausreichende Menge von warmem Wasser in dem Warmwasserspeicher zur Verfügung steht. Alternativ oder zusätzlich ist die Zwischensteckervorrichtung dazu vorgesehen, eine Stromversorgung aus Sicherheitsgründen während eines Zapfvorgangs zumindest temporär zu unterbrechen. Hierdurch kann eine vorteilhaft sichere und/oder komfortable Verwendung eines mit der Zwischensteckervorrichtung verbundenen elektrischen Warmwasserspeichers ermöglicht werden.

Des Weiteren wird ein Verfahren zum Betrieb eines Warmwassererzeugungssystems mit einem elektrischen Warmwasserspeicher und zumindest einer Zwischensteckervorrichtung vorgeschlagen, bei welchem zumindest eine Temperatur an einem Warmwasserauslass des elektrischen Warmwasserspeichers durch die Zwischensteckervorrichtung erfasst wird. Hierdurch kann vorteilhaft einfach und/oder zuverlässig ein Betrieb des Warmwasserspeichers und/oder eine Entnahme von Warmwasser aus dem Warmwasserspeicher erkannt werden.

Ferner wird vorgeschlagen, dass zumindest anhand der erfassten Temperatur ein Nutzerverhalten hinsichtlich eines Benutzungszeitpunkts, eines Benutzungsintervalls, einer Benutzungsdauer und/oder einer Benutzungsintensität des elektrischen Warmwasserspeichers ermittelt wird. Hierdurch können auf einfache und/oder zuverlässige Weise Informationen über ein Nutzerverhalten gewonnen werden.

Zudem wird vorgeschlagen, dass eine Stromversorgung des elektrischen Warmwasserspeichers zumindest in Abhängigkeit von einem Nutzerverhalten und/oder der Temperatur am Warmwasserauslass durch die Zwischensteckervorrichtung hergestellt oder getrennt wird. Hierdurch kann eine vorteilhaft sichere und/oder komfortable Verwendung eines mit der Zwischensteckervorrichtung verbundenen elektrischen Warmwasserspeichers ermöglicht werden.

Die erfindungsgemäße Zwischensteckervorrichtung, das erfindungsgemäße Warmwassererzeugungssystem und/oder das erfindungsgemäße Verfahren sollen/soll hierbei nicht auf die oben beschriebene Anwendung und Ausführungsform beschränkt sein. Insbesondere können/kann die erfindungsgemäße Zwischensteckervorrichtung, das erfindungsgemäße Warmwassererzeugungssystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

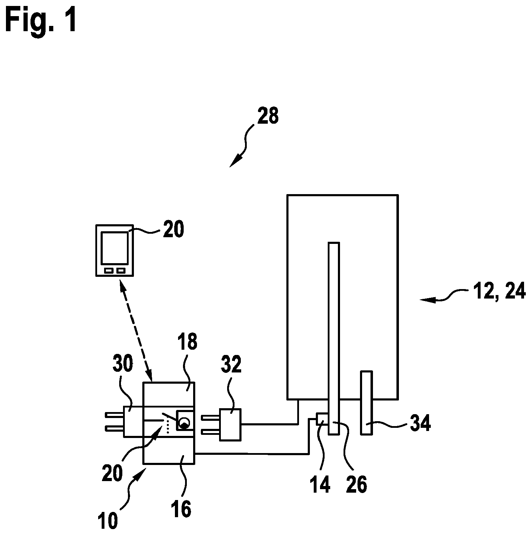

- Fig. 1: eine schematische Darstellung eines Warmwassererzeugungssystems mit einer Zwischensteckervorrichtung und einem elektrischen Warmwasserspeicher.

### Beschreibung des Ausführungsbeispiels

Figur 1 zeigt eine schematische Darstellung eines Warmwassererzeugungssystems 28. Das Warmwassererzeugungssystem 28 umfasst eine Zwischensteckervorrichtung 10. Die Zwischensteckervorrichtung 10 ist zu einer Anordnung zwischen einem mit elektrischer Energie zu versorgenden Elektrogerät 12 und einer mit einer elektrischen Energiequelle verbundenen hier nicht dargestellten Steckdose vorgesehen. Die Zwischensteckervorrichtung 10 weist einen Stecker 30 zum Einführen in eine Steckdose, insbesondere eine Haushaltssteckdose, und zumindest eine hier nicht dargestellte Steckbuchse zum Einführen eines Gerätesteckers 32 des Elektrogeräts 12 auf. Die Zwischensteckervorrichtung 10 ist dazu vorgesehen, in zumindest einem Betriebszustand elektrische Energie von der Steckdose an das mit der Zwischensteckervorrichtung 10 verbundene Elektrogerät 12 zu leiten. Die Zwischensteckervorrichtung 10 weist zumindest einen abgesetzten Temperatursensor 14 auf. Der Temperatursensor 14 ist dazu vorgesehen, zumindest eine Temperatur des Elektrogeräts 12 zu erfassen. Der Temperatursensor 14 kann beispielsweise als ein Thermistor ausgebildet sein, welcher seinen elektrischen Widerstand in Abhängigkeit von der zu erfassenden Temperatur verändert.

Die Zwischensteckervorrichtung 10 umfasst eine Recheneinheit 16, welche dazu vorgesehen ist, anhand der erfassten Temperatur ein Nutzerverhalten hinsichtlich eines Benutzungszeitpunkts, eines Benutzungsintervalls, einer Benutzungsdauer und/oder einer Benutzungsintensität des Elektrogeräts 12 zu ermitteln. Der Temperatursensor 14 ist räumlich entfernt von der Recheneinheit 16 der Zwischensteckervorrichtung 10 angeordnet. Insbesondere kann der Temperatursensor 14 erfasste Temperaturmesswerte drahtlos und/oder drahtgebunden die Recheneinheit 16 der Zwischensteckervorrichtung 10 übertragen. Die Recheneinheit 16 ist insbesondere dazu vorgesehen, anhand der erfassten und/oder gespeicherten Temperaturmesswerte Regelmäßigkeiten und/oder sich wiederholende Muster in einem Nutzerverhalten zu ermitteln. Ferner weist die Zwischensteckervorrichtung 10 eine drahtlose Kommunikationsschnittstelle 18 auf, welche dazu vorgesehen ist, mit zumindest einem externen Bediengerät 20 zu kommunizieren. Insbesondere ist die Kommunikationsschnittstelle 18 zu einer kabellosen Übertragung von elektronischen Daten vorgesehen. Die drahtlose Kommunikationsschnittstelle 18 kann beispielsweise als WLAN-Kommunikationsschnittstelle, als Bluetooth-Kommunikationsschnittstelle, als Funk-Kommunikationsschnittstelle, als RFID-Kommunikationsschnittstelle, als NFC-Kommunikationsschnittstelle, als Infrarot-Kommunikationsschnittstelle, als Mobilfunknetz-Kommunikationsschnittstelle, als Zigbee-Kommunikationsschnittstelle o. dgl. ausgebildet sein. Das externe Bediengerät 20 kann als Smartphone, als Personal-Computer, als Laptop, als Netbook, als Tablet oder als ein anderes, einem Fachmann als sinnvoll erscheinendes externes Gerät ausgebildet sein. Des Weiteren umfasst die Zwischensteckervorrichtung 10 eine Schalteinheit 22. Das externe Bediengerät 20 kann insbesondere dazu vorgesehen sein, die Schalteinheit 22 der Zwischensteckervorrichtung 10 zur Herstellung und/oder Trennung einer elektrischen Energieversorgung eines mit der Zwischensteckervorrichtung 10 verbundenen Elektrogeräts 12 zu bedienen. Alternativ und/oder zusätzlich kann das externe Bediengerät 20 zu einer Konfiguration der Zwischensteckervorrichtung 10, beispielsweise zu einer Einstellung eines Einschaltzeitpunkts, eines Ausschaltzeitpunkts, eines Betriebsintervalls o.dgl., vorgesehen sein. Die Schalteinheit 22 ist vorzugsweise dazu vorgesehen, die Stromversorgung des Elektrogeräts 12 zumindest in Abhängigkeit von einem Nutzerverhalten und/oder der erfassten Temperatur herzustellen oder zu trennen. Die Schalteinheit 22 ist in Abhängigkeit von einem durch die Recheneinheit 16 ermittelten Nutzerverhalten und/oder der erfassten Temperatur durch die Recheneinheit 16 ansteuerbar. Insbesondere kann die Recheneinheit 16 die Schalteinheit 22 zu einem zuvor ermittelten üblichen Benutzungszeitpunkt und/oder für eine übliche Benutzungsdauer des mit der Zwischensteckervorrichtung 10 verbundenen Elektrogeräts 12 zum Herstellen oder Trennen der Stromversorgung des mit der Zwischensteckervorrichtung 10 verbundenen Elektrogeräts 12 ansteuern. Alternativ oder zusätzlich ist die Schalteinheit 22 dazu vorgesehen, die Stromversorgung bei einem Unterschreiten und/oder einem Überschreiten eines Temperaturgrenzwerts herzustellen oder zu trennen.

Das innerhalb des Warmwassererzeugungssystems 28 mit der Zwischensteckervorrichtung 10 verbundene Elektrogerät 12 ist als ein elektrischer Warmwasserspeicher 24 ausgebildet. Der Warmwasserspeicher 24 weist einen Warmwasserauslass 26 auf, welcher dazu vorgesehen ist, während eines Zapfvorgangs erwärmtes Wasser aus dem Warmwasserspeicher 24 auszuleiten. Der Warmwasserspeicher 24 weist ferner eine Kaltwasserleitung 34 auf, welche dazu vorgesehen ist, den Warmwasserspeicher 24 mit kaltem Wasser zu befüllen. Ferner weist der Warmwasserspeicher 24 eine hier nicht dargestellte elektrische Heizeinheit auf, welche dazu vorgesehen ist, elektrische Energie in thermische Energie zu überführen. Die Heizeinheit ist insbesondere innerhalb des Warmwasserspeichers 24 angeordnet. Der Temperatursensor 14 der Zwischensteckervorrichtung 10 ist dazu vorgesehen, eine Temperatur an dem Warmwasserauslass 26 des elektrischen Warmwasserspeichers 24 zu erfassen. Der Temperatursensor 14 ist insbesondere dazu vorgesehen, während eines Betriebs des Warmwasserspeichers 24 betriebsbedingte Temperaturänderungen, insbesondere aufgrund eines Zapfvorgangs, innerhalb des Warmwasserauslasses 26 zu erfassen. Neben dem Temperatursensor 14 kann die Zwischensteckervorrichtung 10 zumindest einen nicht dargestellten abgesetzten Vibrationssensor aufweisen. Insbesondere ist der Vibrationssensor dazu vorgesehen, zumindest eine betriebsbedingte Vibration des Warmwasserspeichers 24 zu erfassen.

Die Zwischensteckervorrichtung 10 ist dazu vorgesehen, anhand der erfassten Temperatur ein Nutzerverhalten hinsichtlich eines Benutzungszeitpunkts, eines Benutzungsintervalls, einer Benutzungsdauer und/oder einer Benutzungsintensität des elektrischen Warmwasserspeichers 24 zu ermitteln. Die Zwischensteckervorrichtung 10 ist insbesondere dazu vorgesehen, anhand der erfassten Temperaturmesswerte einen Verlauf der Temperatur zu analysieren und/oder aus dem Verlauf der Temperatur auf ein Nutzerverhalten, insbesondere hinsichtlich eines Benutzungszeitpunkts, eines Benutzungsintervalls, einer Benutzungsdauer und/oder einer Benutzungsintensität des elektrischen Warmwasserspeichers 24 zu ermitteln. Ferner ist die Zwischensteckervorrichtung 10 dazu vorgesehen, eine Stromversorgung des elektrischen Warmwasserspeichers 24 zumindest in Abhängigkeit von einem Nutzerverhalten und/oder der erfassten Temperatur herzustellen oder zu trennen. Insbesondere kann die Zwischensteckervorrichtung 10 die Stromversorgung des elektrischen Warmwasserspeichers 24 derart schalten, dass zu einem zuvor ermittelten üblichen Benutzungszeitpunkt und/oder für eine übliche Benutzungsdauer des elektrischen Warmwasserspeichers 24 und/oder zu einem üblichen Zeitpunkt und/oder für ein übliches Zeitintervall einer Warmwasserentnahme eine ausreichende Menge von warmen Wasser in dem Warmwasserspeicher 24 zur Verfügung steht.

Ferner ist die Zwischensteckervorrichtung 10 dazu vorgesehen, anhand der erfassten Temperatur eine verbleibende Restmenge warmen Wassers zu ermitteln. Hierzu wird durch einen Benutzer während einer Konfiguration der Zwischensteckervorrichtung 10 über das Bediengerät 20 der Warmwasserspeicher 24 auf maximale Leistung geschaltet und die Kapazität des Warmwasserspeichers 24 spezifiziert. Der Temperatursensor 14 erfasst die Temperatur am Warmwasserauslass 26 und die Recheneinheit 16 ermittelt, wann und wie lange warmes Wasser aus dem Warmwasserspeicher 24 entnommen wird. Anhand dieser Information kann in Verbindung mit weiteren Informationen, beispielsweise einer durch den Warmwasserspeicher 24 aufgenommenen elektrischen Leistung, eine verbleibende Restmenge warmen Wassers ermittelt und dem Benutzer über die Kommunikationsschnittstelle 18 auf dem Bediengerät 20 ausgegeben werden.

Alternativ oder zusätzlich ist die Zwischensteckervorrichtung 10 dazu vorgesehen, eine Stromversorgung aus Sicherheitsgründen, insbesondere falls der Warmwasserspeicher 24 in unmittelbarer Nähe zu einer Zapfstelle, beispielsweise einer Dusche, installiert ist, während eines Zapfvorgangs zumindest temporär zu unterbrechen.

## Patentansprüche

1. Zwischensteckervorrichtung, welche zu einer Anordnung zwischen einem mit elektrischer Energie zu versorgenden Elektrogerät (12) und einer mit einer elektrischen Energiequelle verbundenen Steckdose vorgesehen ist, **gekennzeichnet durch** zumindest einen abgesetzten Temperatursensor (14), welcher dazu vorgesehen ist, zumindest eine Temperatur des Elektrogeräts (12) zu erfassen.

2. Zwischensteckervorrichtung nach Anspruch 1, **gekennzeichnet durch** zumindest eine Recheneinheit (16), welche dazu vorgesehen ist, anhand der erfassten Temperatur ein Nutzerverhalten hinsichtlich eines Benutzungszeitpunkts, eines Benutzungsintervalls, einer Benutzungsdauer und/oder einer Benutzungsintensität des Elektrogeräts (12) zu ermitteln.

3. Zwischensteckervorrichtung nach Anspruch 1 oder 2, **gekennzeichnet durch** zumindest eine drahtlose Kommunikationsschnittstelle (18), welche dazu vorgesehen ist, mit zumindest einem externen Bediengerät (20) zu kommunizieren.

4. Zwischensteckervorrichtung nach einem der vorhergehenden Ansprüche, **gekennzeichnet durch** eine Schalteinheit (22), welche dazu vorgesehen ist, eine Stromversorgung des Elektrogeräts (12) zumindest in Abhängigkeit von einem Nutzerverhalten und/oder der erfassten Temperatur herzustellen oder zu trennen.

5. Warmwassererzeugungssystem mit einem elektrischen Warmwasserspeicher (24) und zumindest einer Zwischensteckervorrichtung (10), insbesondere nach einem der vorhergehenden Ansprüche, **dadurch gekennzeichnet, dass** die Zwischensteckervorrichtung (10) zumindest einen abgesetzten Temperatursensor (14) aufweist, welcher dazu vorgesehen ist, eine Temperatur an einem Warmwasserauslass (26) des elektrischen Warmwasserspeichers (24) zu erfassen.

6. Warmwassererzeugungssystem nach Anspruch 5, **dadurch gekennzeichnet, dass** die Zwischensteckervorrichtung (10) dazu vorgesehen ist, anhand der erfassten Temperatur ein Nutzerverhalten hinsichtlich eines Benutzungszeitpunkts, eines Benutzungsintervalls, einer Benutzungsdauer und/oder einer Benutzungsintensität des elektrischen Warmwasserspeichers (24) und/oder eine verbleibende Restmenge warmen Wassers zu ermitteln.

7. Warmwassererzeugungssystem nach Anspruch 5 oder 6, **dadurch gekennzeichnet, dass** die Zwischensteckervorrichtung (10) dazu vorgesehen ist, eine Stromversorgung des elektrischen Warmwasserspeichers (24) zumindest in Abhängigkeit von einem Nutzerverhalten und/oder der erfassten Temperatur herzustellen oder zu trennen.

8. Verfahren zum Betrieb eines Warmwassererzeugungssystems (28), nach einem der Ansprüche 5 bis 7, mit einem elektrischen Warmwasserspeicher (24) und zumindest einer Zwischensteckervorrichtung (10), insbesondere nach einem der Ansprüche 1 bis 4, **dadurch gekennzeichnet, dass** zumindest eine Temperatur an einem Warmwasserauslass (26) des elektrischen Warmwasserspeichers (24) durch die Zwischensteckervorrichtung (10) erfasst wird.

9. Verfahren nach Anspruch 8, **dadurch gekennzeichnet, dass** zumindest anhand der erfassten Temperatur ein Nutzerverhalten hinsichtlich eines Benutzungszeitpunkts, eines Benutzungsintervalls, einer Benutzungsdauer und/oder einer Benutzungsintensität des elektrischen Warmwasserspeichers (24) ermittelt wird.

10. Verfahren nach Anspruch 8 oder 9, **dadurch gekennzeichnet, dass** eine Stromversorgung des elektrischen Warmwasserspeichers (24) zumindest in Abhängigkeit von einem Nutzerverhalten und/oder der Temperatur am Warmwasserauslass (26) durch die Zwischensteckervorrichtung (10) hergestellt oder getrennt wird.
